# EUROPÄISCHE PATENTSCHRIFT

(11) **EP 0 672 634 B1**
(45) Veröffentlichungstag und Bekanntmachung des Hinweises auf die Patenterteilung: **08.04.1998**
(21) Anmeldenummer: 95100646.9
(22) Anmeldetag: 19.01.1995
(51) Int. Cl.: C04B 11/02, C04B 11/032

(54) **Verfahren zur kontinuierlichen Herstellung von alpha-Calciumsulfat-Halbhydrat aus Calciumsulfat-Dihydrat**
Process for continuous production of alpha-calcium sulphate hemihydrate from calcium sulphate dihydrate
Procédé de fabrication en continu de hémihydrate de type alpha à partir de sulfate de calcium hydraté

(30) Priorität: 18.03.1994 DE 4409219
(43) Veröffentlichungstag der Anmeldung: 20.09.1995
(73) Patentinhaber: Salzgitter Anlagenbau GmbH, 38239 Salzgitter (DE)
(72) Erfinder: Brosig, Alfred, D-38228 Salzgitter (DE); Riancho, Patrick, D-38259 Salzgitter (DE)
(74) Vertreter: Köckeritz, Günter

(56) Entgegenhaltungen:
- EP-A- 0 572 781
- DE-B- 1 238 374
- FR-A- 2 613 346
- GB-A- 1 125 989
- DATABASE WPI Week 8927 Derwent Publications Ltd., London, GB; AN 89-198478 & RO-A-96 170 (INST. IND. LJANTILOR)

## Beschreibung

Die Erfindung betrifft ein Verfahren zur schnellen Herstellung von alpha-Calciumsulfat-Halbhydrat aus Calciumsulfat-Dihydrat.

Gips ist die mineralogisch-technische Bezeichnung der chemischen Verbindung des Calciumsulfat-Dihydrates (CaSO₄ x 2H₂O). Durch thermische Behandlung läßt sich der Gips in das Calciumsulfat-Halbhydrat (CaSO₄ x 1/2 H₂O) überführen, wobei das Calciumsulfat-Dihydrat 1 1/2 Teile seines Kristallwassers verliert. Das Calciumsulfat-Halbhydrat besitzt die vorteilhafte Eigenschaft, daß es bei Temperaturen unterhalb der Umwandlungstemperatur, bei Anwesenheit von Wasser, zu einer festen Masse erstarrt. Es handelt sich dabei um die Rückreaktion zum Calciumsulfat-Dihydrat.

Findet die thermische Behandlung (Calcinierung) des Gipses bei atmosphärischem Druck in einer Gasatmosphäre statt, so erhält man die beta-Modifikation des Calciumsulfat-Halbhydrates.

Technisch wird das beta-Calciumsulfat-Halbhydrat überwiegend in sogenannten Kochern, Drehrohröfen oder Stromkalzinatoren hergestellt. Dagegen erfolgt die Herstellung der alpha-Modifikation des Calciumsulfat-Halbhydrates in dampfbeaufschlagten Autoklaven, in Lösungen von Elektrolyten oder in einer wässrigen Suspension, bei einer oberhalb der Umwandlungstemperatur liegenden Suspensionstemperatur.

Nach dem Stand der Technik unterscheidet man bei der Umwandlung von Calciumsulfat-Dihydrat zu alpha-Calciumsulfat-Halbhydrat, entsprechend der Herstellungsbedingungen, in Naß-alpha-Calciumsulfat-Halbhydrat-Verfahren und Trocken-alpha-Calciumsulfat-Halbhydrat-Verfahren.

Bei den Trocken-alpha-Calciumsulfat-Halbhydrat-Verfahren handelt es sich in der Regel um einen diskontinuierlichen Prozeß. Stückiger Naturgips, an den hohe Ansprüche in Bezug auf Kompaktheit und Reinheit, bezogen auf den Calciumsulfat-Dihydratgehalt, gestellt werden, wird auf Hordenwagen geschichtet und in einen Autoklaven eingebracht. Dort wird das Calciumsulfat-Dihydrat durch gespannten Wasserdampf erhitzt. Dieser Vorgang muß sehr behutsam durchgeführt werden, damit auch im Kernbereich der Gipsstücke die Umwandlung erfolgen kann. Um eine gleichmäßige Qualität des alpha-Calciumsulfat-Halbhydrates bei hohem Umwandlungsgrad zu gewährleisten, sind Verweilzeiten in Autoklaven von mehreren Stunden erforderlich. An die thermische Behandlung schließt sich eine Desagglomerierung, Trocknung und Mahlung des alpha-Calciumsulfat-Halbhydrates an.

Nach dem gleichen Prinzip ist ein Verfahren bekannt, bei dem aus feinteiligem Calciumsulfat-Dihydrat z. B. Rauchgasentschwefelungsgips, auf dem "trockenen" Wege alpha-Calciumsulfat-Halbhydrat hergestellt wird. In diesem Fall wird das feinteilige Calciumsulfat-Dihydrat zunächst zu Steinrohlingen gepreßt, bevor die Umwandlung im Autoklaven nach dem vorstehend beschriebenen Prinzip erfolgt. (Zement-Kalk-Gips, Nr. 10/1989, Seite 539)

Vorteilhaft sind die Wassersuspensionsverfahren, die sich dadurch auszeichnen, daß das Calciumsulfat-Dihydrat auf dem Wege der Neukristallisation in das alpha-Calciumsulfat-Halbhydrat überführt wird. Durch den Zusatz von Säuren und Additiven, sowie durch kontrollierte Temperatur- und Druckführung des Prozesses, läßt sich die Geschwindigkeit des Kristallwachstumes und die Form der alpha-Calciumsulfat-Halbhydrat-Kristalle beeinflussen.

Die Naß-alpha-Calciumsulfat-Halbhydrat-Verfahren unterscheiden sich voneinander dadurch, ob sie bei atmosphärischen Druck oder bei einem Druck, der oberhalb des atmosphärischen Druckes liegt, geführt werden.

Bei den drucklosen Verfahren wird feinteiliges Calciumsulfat-Dihydrat, wie z. B. feingemahlener Naturgips, Rauchgasentschwefelungsgips oder sonstige chemische Abfallgipse als wässrige Suspension angesetzt. Nach kontrollierter Zugabe von Elektrolyten (CaCl₂, MgCl₂, KCl usw.) und/oder Säuren (z. B. HNO₃, H₃PO₄, H₂SO₄) erfolgt die Umwandlung zu alpha-Calciumsulfat-Halbhydrat durch Erhitzen in direkt oder indirekt beheizten, drucklosen Rührreaktoren.

In der industriellen Praxis konnten sich derartige Verfahren nur schwer durchsetzen, da an den verfahrenstechnischen Ausrüstungen erheblich Korrosionsprobleme auftreten und die Waschung/Reinigung des Produktes schwer beherrschbar ist. Zudem sind Verkrustungen und Anbackungen durch rehydratisiertes Calciumsulfat-Dihydrat, während und im Anschluß an die Filtration, ein Problem.

Bei den druckbeaufschlagten Naß-Verfahren wird ebenfalls feinteiliges Calciumsulfat-Dihydrat als wässrige Suspension angesetzt. Zur Beeinflussung der Kristallwachstumsgeschwindigkeit und der Kristallformbildung werden Additive zudosiert. Die Suspension wird in einen oder mehrere in Serie geschaltete Rührautoklaven gepumpt und durch indirekte Wärmezugabe oder direkte Zugabe von gespanntem Wasserdampf erhitzt. Das Ergebnis der Kalzinierung ist abhängig vom pH-Wert der Suspension, der Temperatur und dem Druck im Autoklaven sowie der Verweilzeit, die in der Regel zwischen einer und mehreren Stunden liegt. Unter diesen Bedingungen ist es möglich, die Kristalltracht wunschgemäß zu beeinflussen und einen Umwandlungsgrad zu alpha-Calciumsulfat-Halbhydrat von mehr als 98 Prozent zu erreichen. Nachteilig bei diesen Verfahren sind die lange Verweilzeit sowie der hohe Suspensionswasserbedarf je Gewichtseinheit Calciumsulfat-Dihydrat.

Durch die Entspannung auf atmosphärischen Druck während der Entwässerung der Suspension, die Abkühlung des Filtrates auf die entsprechende Sättigungstemperatur sowie die erhebliche Abwassermenge, ist ein hoher thermischer Energiebedarf notwendig, der den thermischen Wirkungsgrad des Verfahrens negativ beeinflußt.

Ein druckbeaufschlagtes Naß-Verfahren ist unter der Patentnummer DBP 1 157 128 patentiert worden. Zwei englische Patente mit den Patentnummern 1051 849 und 1198 807 beschreiben ein kontinuierliches, druckbeaufschlagtes Naß-Verfahren.

Diesen Verfahren ist gemeinsam, daß die alpha-Calciumsulfat-Halbhydrat-Suspension, nach der Entspannung auf atmosphärischen Druck, in Zentrifugen oder auf Vakuumfilter entwässert und, soweit notwendig, gewaschen wird. Bei der Konstruktion der Entwässerungsausrüstungen sind besondere Vorkehrungen zu treffen, um Verkrustungen und Anbackungen entgegenzuwirken. Üblicherweise geschieht dies durch Beheizung der Kontaktflächen, falls dies technisch realisierbar ist.

Das erfindungsgemäße Verfahren stellt eine Kombination aus einem kontinuierlichen druckbeaufschlagtem Naß-alpha-Calciumsulfat-Halbhydrat-Verfahren und einen kontinuierlichen Trocken-alpha-Calciumsulfat-Halbhydrat-Verfahren dar. Demzufolge werden zwei Reaktoren (Autoklaven) vorgesehen, die beide direkt mit gespanntem Dampf beaufschlagt werden.

Feinteiliges Calciumsulfat-Dihydrat wird durch Zugabe von Wasser suspendiert. Die Suspension wird in einen Rührautoklaven gepumpt, wo die hydrothermale Umkristallisation des Calciumsulfat-Dihydrates teilweise erfolgt. Zur Erzielung der günstigsten Umkristallisationsbedingungen können kristallwachstumsbeeinflussende Säuren und Additive, dosiert werden. Durch Rückführung von Mutterfiltratüberschuß aus der Entwässerungszone, ist es möglich, Kristallisationskeime in den Rührautoklaven zuzugeben, die den Umkristallisationsvorgang beschleunigen können.

Aus dem Rührautoklaven gelangt die Suspension in eine druckgekapselte Entwässerungseinrichtung, in der das überschüssige Suspensionswasser entfernt wird.

Der feuchte Filterkuchen gelangt nun in den Trockenautoklaven, wo die Umwandlung des verbliebenen Calciumsulfat-Halbhydrates, durch die direkte Zugabe von gespanntem Dampf, zu alpha-Calciumsulfat-Halbhydrat vollendet wird. Das alpha-Calciumsulfat-Halbhydrat wird aus dem Druckbereich ausgeschleust, wobei eine spontane Entspannung der anhaftenden Restfeuchte auf atmosphärischen Druck erfolgt. Die dabei frei werdende Entspannungswärme, führt zu einer Vortrocknung des alpha-Calciumsulfat-Halbhydrates.

Die Resttrocknung wird in einem indirekt beheizten Trockner durchgeführt.

Es wurde festgestellt, daß die Umwandlung des Calciumsulfat-Dihydrates zu alpha-Calciumsulfat-Halbhydrat nach dem druckbeaufschlagten Naß-Verfahren in drei Phasen abläuft (siehe auch beiliegende Umwandlungskurven).

### Phase I

Die Phase I kann als die Zeit definiert werden, die für die Aufheizung des Calciumsulfat-Dihydrates, bis zum Beginn der Umwandlung zu alpha-Calciumsulfat-Halbhydrat, benötigt wird. Die Parameter Temperatur, Korngrößenverteilung des Calciumsulfat-Dihydrates, Art der Dampfzugabe, Rührintensität und Suspensionsdichte beeinflussen maßgeblich die Dauer der Phase I.

### Phase II

Die Phase II kann als die Zeit definiert werden, die vom Beginn der Umwandlung bis zu einem Umwandlungsgrad von 60 % - 90 % zu alpha-Calciumsulfat-Halbhydrat abläuft. Diese Teilumwandlung des Calciumsulfat-Dihydrates zu alpha-Calciumsulfat-Halbhydrat erfolgt zunächst sehr rasch, verlangsamt sich jedoch, je mehr alpha-Calciumsulfat-Halbhydrat gebildet wird. Das Ende der Phase II wird in der Art bestimmt, daß eine an die Umwandlungskurve angelegte Tangente einen Wert von 10 - 15 ° gegen die Horizontale annimmt. Es wurde festgestellt, daß unter diesen Bedingungen die Bildung von unerwünschtem Calciumsulfat-Anhydrit vermieden wird, selbst wenn die Umwandlung bei extrem hohen Temperaturen (bis zu 200 °C) erfolgte.

### Phase III

Die anschließende Restumwandlung des verbliebenen Calciumsulfat-Dihydrats zu alpha-Calciumsulfat-Halbhydrat erfolgt sehr langsam. Das Ende der Restumwandlung und somit das Ende der Phase III ist dadurch gekennzeichnet, daß die Umwandlungskurve asymptotisch gegen die Horizontale verläuft.

Diese Zeitphase kann mehr als 80 % der gesamten Umwandlungsdauer betragen, wobei Umwandlungsgrade von 90 % - 99 % erreicht werden können. In jedem Fall ist zu vermeiden, daß während der Phase III die Umwandlungstemperatur 160 °C übersteigt, da ansonsten die Bildung von unerwünschtem Calciumsulfat-Anhydrit möglich ist.

Überraschenderweise wurde festgestellt, daß nach einer Entwässerung der Suspension zum Ende der Phase II, mit einer sich anschließenden Bedampfung des Filterkuchens mittels gespanntem Dampf gemäß dem Trocken-alpha-Calciumsulfat-Halbhydrat-Verfahren, die Restumwandlung zum alpha-Calciumsulfat-Halbhydrat sehr rasch verläuft ohne die Qualitätsmerkmale nachteilig zu beeinflussen.

Die Umwandlungskurve weicht dabei von ihrem asympotischen Verlauf ab und es werden Umwandlungsgrade von 98 % innerhalb kürzester Zeit erreicht (siehe Umwandlungskurven). Bei Bedampfungstemperaturen von bis zu 200 °C wurde keine Bildung von Calciumsulfat-Anhydrit festgestellt, ein Umwandlungsgrad von 98 % wird in einer Zeit erreicht, die maximal 10 % der nach dem konventionellen Verfahren notwendigen Zeit der Phase III entspricht.

Ein besonderer Vorteil des erfindungsgemäßen Verfahrens ist, daß feinteiliges Calciumsulfat-Dihydrat zu alpha-Calciumsulfat-Halbhydrat umgewandelt werden kann, mit der Möglichkeit, besondere Qualitätsmerkmale kontrolliert herzustellen. Der Verfahrensablauf ist in sich geschlossen und wird kontinuierlich betrieben. Durch die Auswahl von druckgekapselten verfahrenstechnischen Ausrüstungen, wie Rührautoklav, Druckentwässerungseinrichtung und Trockenautoklav und die geringen Verweilzeiten, wird der maschinelle und apparative Aufwand gering gehalten.

Der thermische Energiebedarf für die Trocknung des alpha-Calciumsulfat-Halbhydrates wird, aufgrund der Nutzung der Entspannungsdampfwärme, auf ein Mimimum reduziert.

Anhand der nachstehenden Beispiele wird der Gegenstand der Erfindung näher erläutert.

### Beispiel 1:

1.1 Ein Rauchgasentschwefelungsgips, mit einer Reinheit von 97 % bezogen auf Calciumsulfat-Dihydrat, wurde mit einer Konzentration von 400 g Gips pro Liter Wasser und einem pH-Wert von 3,5 in einem 5 l Rührautoklaven, bei einem Druck von 4 bar und einer Temperatur von 143 °C, innerhalb von 60 Minuten zu alpha-Calciumsulfat-Halbhydrat umgewandelt.
   Anschließend wurde die Gipssuspension auf atmosphärischen Druck entspannt und in einer Vakuumnutsche, bei einer Temperatur von 100 °C, mit 500 ml kochendem Wasser gewaschen und entwässert. Der feuchte Filterkuchen wurde getrocknet, desagglomeriert und in einer langsamdrehenden Stiftmühle gemahlen.
1.2 Derselbe Rauchgasentschwefelungsgips wurde unter den gleichen Bedingungen innerhalb von 15 Minuten zu alpha-Calciumsulfat-Halbhydrat teilumgewandelt.
   Anschließend wurde die Gipssuspension in einer Drucknutsche innerhalb von 30 Sekunden entwässert und der Gipskuchen mit gespanntem Wasserdampf, bei einem Druck von 3 bar und einer Temperatur von 133 °C, innerhalb von 60 Sekunden weiterkalziniert. Während dieses Verfahrensschrittes wurde darauf geachtet, daß der Druck im unteren Bereich des Gipskuchens 2 bar nicht unterschreitet.
   Anschließend wurde der Gipskuchen auf atmosphärischen Druck entspannt, getrocknet, desagglomeriert und gemahlen.

### Ergebnisse

| Beispiel: | **1.1** | **1.2** |
|---|---|---|
| Umwandlungsgrad zu alpha-Halbhydrat | 92 % | 98,7 % |
| pH-Wert | 5,8 | 5,2 |
| Einstreumenge (pro 100 ml Wasser) | 238 g | 272 g |
| Druckfestigkeit (nach 28 Tagen) | 26 N/mm² | 38 N/mm² |

### Beispiel 2:

2.1 Derselbe Rauchgasentschwefelungsgips wurde mit einer Konzentration von 3000 g pro Liter Wasser und einem pH-wert von 3,5 in einem 5 l Rührautoklaven, bei einem Druck von 8 bar und einer Temperatur von 170 °C, innerhalb von 10 Minuten zu alplha-Calciumsulfat-Halbhydrat umgewandelt.
   Anschließend wurde die Gipssuspension auf atmosphärischen Druck entspannt und in einer Vakuumnutsche, bei einer Temperatur von 100 °C, mit 500 ml kochenden Wasser gewaschen und entwässert. Der feuchte Filterkuchen wurde getrocknet, desagglomeriert und in einer langsamdrehenden Stiftmühle gemahlen.
2.2 Derselbe Rauchgasentschwefelungsgips wurde unter den gleichen Bedingungen innerhalb von 25 Minuten kalziniert. Anschließend wurde die Gipssusspension auf atmosphärischen Druck enspannt, getrocknet, desagglomeriert und gemahlen.
2.3 Derselbe Rauchgasentschwefelungsgips wurde mit einer Konzentration von 3000 g Gips pro 1 Liter Wasser und einem pH-Wert von 3,5 in einem 5 l Rührautoklaven, bei einem Druck von 8 bar und einer Temperatur von 170 °C, zu alpha-Calciumsulfat-Halbhydrat innerhalb von 3 Minuten teilumgewandelt.
   Anschließend wurde die Gipssuspension in einer Drucknutsche innerhalb von 10 Sekunden entwässert und der entstandene Gipskuchen mit gespanntem Wasserdampf, bei einem Druck von 3 bar und einer Temperatur von 133 °C, innerhalb von 45 Sekunden weiterkalziniert.
   Anschließend wurde der Gipskuchen auf atmosphärischen Druck entspannt, getrocknet, desagglomeriert und gemahlen.

### Ergebnisse

| Beispiel | **2.1** | **2.2** | **2.3** |
|---|---|---|---|
| Umwandlungsgrad zu alpha-Halbhydrat | 92 % | 68 % | 98,4 % |
| pH-Wert | 5,8 | 5,8 | 5,2 |
| Einstreumenge (pro 100 ml Wasser) | 178 g | Umwandlung zu reinem alpha-Calciumsulfat-Halbhyrat nicht möglich (Anhydritgehalt 18,5 %) | 243 g |
| Druckfestigkeit (nach 28 Tagen) | 19 N/mm² | | 29 N/mm² |

### Beispiel 3:

Ein Phosphogips, der bei der Produktion von Phosphorsäure durch Aufschluß von Silinjärvi-Rohphosphat mit Schwefelsäure anfällt, wurde zunächst in einer Vorreinigungsstufe mit Wasser suspendiert, filtriert und im Gegenstrom gewaschen.

Die löslichen Verunreinigungen des Rohgipses wurden dadurch zu mehr als 95 % eliminiert. Die Reinheit des Phosphogipses, bezogen auf Calciumsulfat-Dihydrat, betrug vor der Reinigung ca. 92 %. Anschließend erfolgte die Herstellung von alpha-Calciumsulfat-Halbhydrat analog zu den Beispielen 1.1, 1.2 und 2.3 für die Beispiele 3.1, 3.2 und 3.3.

### Ergebnisse

| Beispiel: | **3.1** | **3.2** | **3.3** |
|---|---|---|---|
| Umwandlungsgrad | 90 % | 99 % | 98,4 % |
| pH-Wert | 5,6 | 5,2 | 5,0 |
| Einstreumenge (pro 100 ml Wasser) | 222 g | 231 g | 222 g |
| Druckfestigkeit (nach 28 Tagen) | 21,2 N/mm² | 22,2 N/mm² | 21,5 N/mm² |

### Beispiel 4:

Ein Naturgips mit einer Reinheit von 86 %, bezogen auf Calciumsulfat-Dihydrat, wurde zuerst auf eine Korngröße d₅₀ = 100 µm feingemahlen. Anschließend erfolgte die Herstellung von alpha-Calciumsulfat-Halbhydrat analog zu den Beispielen 1.1, 1.2 und 2.3, für die Beispiele 4.1, 4.2 und 4.3.

### Ergebnisse

| Beispiel: | **4.1** | **4.2** | **4.3** |
|---|---|---|---|
| Umwandlungsgrad zu alpha-Halbhydrat | 89 % | 98,5 % | 98 % |
| pH-Wert | 6 | 6 | 5,8 |
| Einstreumenge (pro 100 ml Wasser) | 242 g | 262 g | 240 g |
| Druckfestigkeit (nach 28 Tagen) | 28,1 N/mm² | 32,5 N/mm² | 27,5 N/mm² |

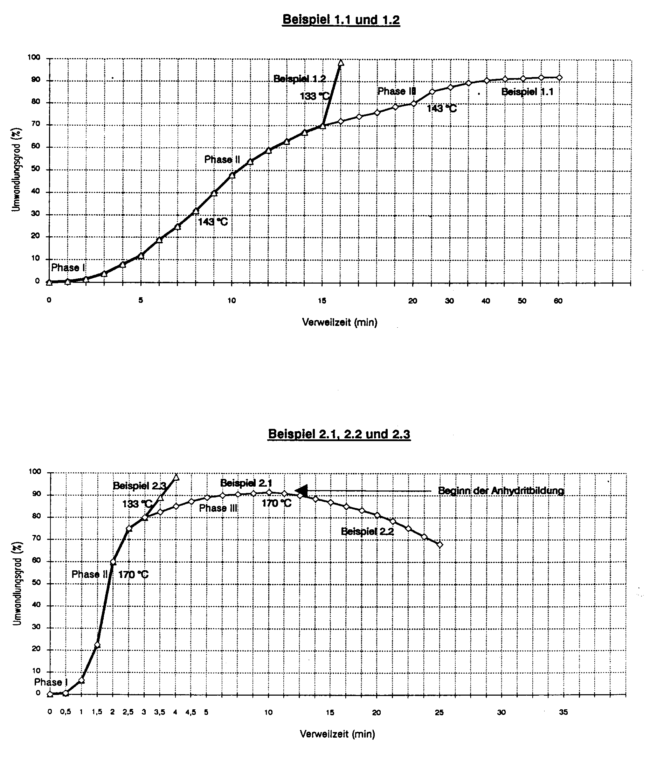

## Patentansprüche

1. Verfahren zur kontinuierlichen Herstellung von alpha-Calciumsulfat-Halbhydrat aus feinteiligem Calciumsulfat-Dihydrat, dadurch gekennzeichnet, daß feinteiliges Calciumsulfat-Dihydrat kontinuierlich als Wassersuspension in mit gespanntem Dampf beaufschlagte Rührautoklaven zugegeben wird, wobei eine Teilumwandlung zu alpha-Calciumsulfat-Halbhydrat nach dem druckbeaufschlagten Naß-Verfahren erfolgt und anschließend, im Anschluß an eine kontrolliert geführte Entfernung des Mutterfiltratüberschusses, die Restumwandlung zu alpha-Calcium-Halbhydrat in einem zweiten, mit gespanntem Dampf beaufschlagten Trockenautoklaven vollendet wird, wobei die Restumwandlung nach einem druckbeaufschlagten Trockenverfahren erfolgt.

2. Verfahren nach Anspruch 1, dadurch gekennzeichnet, daß ein feinteiliges Calciumsulfat-Dihydrat, wie feingemahlener Naturgips oder Rauchgasentschwefelungsgips oder sonstiger chemischer Abfallgips, zu alpha-Calciumsulfat-Halbhydrat umgewandelt wird.

3. Verfahren nach Anspruch 1 und 2, dadurch gekennzeichnet, daß das feinteilige Calciumsulfat-Dihydrat als wässrige Suspension mit einem Feststoffgehalt von 400 g - 3300 g, vorzugsweise 2000 - 3300 g je Liter Wasser aufgegeben wird.

4. Verfahren nach Anspruch 1 bis 3, dadurch gekennzeichnet, daß der wässrigen Suspension Additive beigegeben werden, die die Umwandlung und das Kristallwachstum beeinflussen.

5. Verfahren nach Anspruch 1 bis 4, dadurch gekennzeichnet, daß die Umwandlungstemperatur im Rührautoklaven 130 °C - 200 °C, vorzugsweise 160 °C - 180 °C beträgt.

6. Verfahren nach Anspruch 1 bis 5, dadurch gekennzeichnet, daß der Druck im Rührautoklaven 3 - 16 bar, vorzugsweise 6,5 - 10,5 bar beträgt.

7. Verfahren nach Anspruch 1 bis 6, dadurch gekennzeichnet, daß das Calciumsulfat-Dihydrat im Rührautoklaven bis 70 % - 90 %, vorzugsweise 75 % - 85 % zu alpha-Calciumsulfat-Halbhydrat teilumgewandelt wird.

8. Verfahren nach Anspruch 1 bis 7, dadurch gekennzeichnet, daß das teilumgewandelte Calciumsulfat-Dihydrat auf eine freie Feuchte von 8 % bis 30 % druckentwässert wird.

9. Verfahren nach Anspruch 1 bis 8, dadurch gekennzeichnet, daß die Umwandlungstemperatur im Trockenautoklaven nicht unter 125 °C, vorzugsweise zwischen 130 °C und 160°C liegt.

10. Verfahren nach Anspruch 1 bis 9, dadurch gekennzeichnet, daß der Druck im Trockenautoklaven 2,5 - 7 bar, vorzugsweise 3 - 6,5 bar beträgt.

11. Verfahren nach Anspruch 1 bis 10, dadurch gekennzeichnet, daß die Entwässerung der Calciumsulfat-Dihydrat/alpha-Calciumsulfat-Halbhydrat-Suspension und die Restumwandlung zu alpha-Calciumsulfat-Halbhydrat in einer in sich geschlossenen Ausrüstung erfolgen.

12. Verfahren nach Anspruch 1- 11, dadurch gekennzeichnet, daß die Calciumsulfat-Dihydrat/alpha-Calciumsulfat-Halbhydrat-Suspension um 0,5 - 13,5 bar, vorzugsweise 4 - 8 bar zwischenentspannt wird und der dabei frei werdende Dampf für die Restumwandlung des Calciumssulfat-Dihydrates zu alpha-Calciumsulfat-Halbhydrat genutzt wird.

13. Verfahren nach Anspruch 1 bis 12, dadurch gekennzeichnet, daß ein Teilstrom des Mutterfiltrates in den Rührautoklaven rezirkuliert wird, um Kristallisationskeime einzutragen.

14. Verfahren nach Anspruch 1 bis 13, dadurch gekennzeichnet, daß das alpha-Calciumsulfat-Halbhydrat in eine nachgeschaltete Trocknungseinrichtung direkt druckentspannt wird.

15. Verfahren nach Anspruch 1 bis 14, dadurch gekennzeichnet, daß die Kondensationswärme des Abdampfes der alpha-Calciumsulfat-Halbhydrat-Anlage zur Erwärmung des Calciumsulfat-Dihydrates genutzt wird.

## Claims

1. Method of continuously producing alpha-calcium sulphate hemihydrate from finely divided calcium sulphate dihydrate, characterised in that finely divided calcium sulphate dihydrate is continuously added as a water suspension in an agitator autoclave subjected to superheated vapour, a partial conversion to alpha-calcium sulphate hemihydrate occuring after the pressurised wetting process and then, subsequent to a controlled removal of the excess mother filtrate, the remaining conversion to alpha-calcium hemihydrate being completed in a second drying autoclave subjected to superheated vapour, the remaining conversion being achieved after a pressurised drying process.

2. Method according to claim 1, characterised in that a finely divided calcium sulphate dihydrate, such as finely ground natural gypsum or flue gas desulphurising gypsum or other chemical waste gypsum, is converted to form alpha-calcium sulphate hemihydrate.

3. Method according to claims 1 and 2, characterised in that finely divided calcium sulphate dihydrate is delivered as aqueous suspension with a solid content of 400 g - 3300 g, preferably 2000 - 3300 g per litre of water.

4. Method according to claims 1 to 3, characterised in that additives, which influence the conversion and the crystal growth, are added to the aqueous suspension.

5. Method according to claims 1 to 4, characterised in that the conversion temperature in the agitator autoclave is 130° C - 200° C, preferably 160° C - 180° C.

6. Method according to claims 1 to 5, characterised in that the pressure in the agitator autoclave is 3 - 16 bar, preferably 6.5 - 10.5 bar.

7. Method according to claims 1 to 6, characterised in that up to 70 % - 90 %, preferably 75 % - 85 %, of the calcium sulphate dihydrate in the agitator autoclave is partially converted to form alpha-calcium sulphate hemihydrate.

8. Method according to claims 1 to 7, characterised in that the partially converted calcium sulphate dihydrate is pressure-dehydrated to a free dampness of 8 % to 30 %.

9. Method according to claims 1 to 8, characterised in that the conversion temperature in the drying autoclave is not below 125° C and is preferably between 130° C and 160° C.

10. Method according to claims 1 to 9, characterised in that the pressure in the drying autoclave is 2.5 - 7 bar, preferably 3 - 6.5 bar.

11. Method according to claims 1 to 10, characterised ii, that the dehydration of the calcium sulphate dihydrate/alpha-calcium sulphate hemihydrate suspension and the remaining conversion to form alpha-calcium sulphate hemihydrate are effected in a self-contained apparatus.

12. Method according to claims 1 - 11, characterised in that the calcium sulphate dihydrate/alpha-calcium sulphate hemihydrate suspension is intermediately relieved of tension by 0.5 - 13.5 bar, preferably 4 - 8 bar, and the vapour thereby becoming free is used for the remaining conversion of the calcium sulphate dihydrate to form alpha-calcium sulphate hemihydrate.

13. Method according to claims 1 to 12, characterised in that a partial flow of the mother filtrate is recirculated into the agitator autoclave, in order to feed nuclei of crystallisation.

14. Method according to claims 1 to 13, characterised in that the alpha-calcium sulphate hemihydrate is directly relieved of pressure in a subsequently added drying means.

15. Method according to claims 1 to 14, characterised in that the condensation heat of the waste vapour of the alpha-calcium sulphate hemihydrate plant is used to heat the calcium sulphate dihydrate.

## Revendications

1. Procédé pour la préparation en continu de semi-hydrate de sulfate de calcium de type alpha à partir de dihydrate de sulfate de calcium finement divisé, caractérisé en ce qu'on charge du dihydrate de sulfate de calcium finement divisé en continu sous forme d'une suspension aqueuse dans un autoclave d'agitation, chargé de vapeur sous pression, dans lequel une conversion partielle en semi-hydrate de sulfate de calcium de type alpha a lieu conformément au procédé par voie humide, sous pression, et ensuite, directement après une élimination du filtrat-mère en excès guidée de manière contrôlée, on achève la conversion restante en semi-hydrate de calcium de type alpha dans un second autoclave de séchage, chargé de vapeur sous pression, la conversion restante étant réalisée conformément à un procédé par voie sèche, sous pression.

2. Procédé selon la revendication 1, caractérisé en ce qu'on transforme un dihydrate de sulfate de calcium finement divisé, tel que du gypse naturel finement broyé ou du gypse finement broyé provenant de la désulfuration de gaz de fumée ou encore d'autres déchets de gypse d'origine chimique, pour obtenir un semi-hydrate de sulfate de calcium de type alpha.

3. Procédé selon les revendications 1 et 2, caractérisé en ce qu'on amène le dihydrate de sulfate de calcium finement divisé sous forme d'une suspension aqueuse possédant une teneur en substances solides de 400 g - 3300 g, de préférence de 2000 - 3300 g par litre d'eau.

4. Procédé selon les revendications 1 à 3, caractérisé en ce qu'on ajoute à la suspension aqueuse des additifs qui influencent la conversion et la croissance des cristaux.

5. Procédé selon les revendications 1 à 4, caractérisé en ce que la température de conversion dans l'autoclave d'agitation s'élève de 130°C à 200°C, de préférence de 160°C à 180°C.

6. Procédé selon les revendications 1 à 5, caractérisé en ce que la pression régnant dans l'autoclave d'agitation s'élève à 3-16 bar, de préférence à 6,5-10,5 bar.

7. Procédé selon les revendications 1 à 6, caractérisé en ce que le dihydrate de sulfate de calcium est soumis dans l'autoclave d'agitation à une conversion partielle jusqu'à concurrence de 70% à 90%, de préférence de 75% à 85% pour obtenir un semi-hydrate de sulfate de calcium de type alpha.

8. Procédé selon les revendications 1 à 7, caractérisé en ce qu'on soumet le dihydrate de sulfate de calcium ayant subi une conversion partielle à une déshydratation sous pression pour obtenir une humidité libre à concurrence de 8% à 30%.

9. Procédé selon les revendications 1 à 8, caractérisé en ce que la température de conversion dans l'autoclave de séchage n'est pas inférieure à 125°C et se situe de préférence entre 130°C et 160°C.

10. Procédé selon les revendications 1 à 9, caractérisé en ce que la pression régnant dans l'autoclave de séchage s'élève de 2,5 à 7 bar, de préférence de 3 à 6,5 bar.

11. Procédé selon les revendications 1 à 10, caractérisé en ce que la déshydratation de la suspension de dihydrate de sulfate de calcium/semi-hydrate de sulfate de calcium de type alpha et la conversion restante en semi-hydrate de sulfate de calcium de type alpha ont lieu dans un équipement fermé en soi.

12. Procédé selon les revendications 1 à 11, caractérisé en ce qu'on soumet la suspension de dihydrate de sulfate de calcium/semi-hydrate de sulfate de calcium de type alpha à une détente intermédiaire de 0,5 - 13,5 bar, de préférence de 4 à 8 bar, et on utilise la vapeur qui se libère en l'occurrence pour la conversion restante du dihydrate de sulfate de calcium pour obtenir le semi-hydrate de sulfate de calcium de type alpha.

13. Procédé selon les revendications 1 à 12, caractérisé en ce qu'on recycle un courant partiel du filtrat-mère dans l'autoclave d'agitation pour introduire des germes de cristallisation.

14. Procédé selon les revendications 1 à 13, caractérisé en ce qu'on soumet le semi-hydrate de sulfate de calcium de type alpha dans un dispositif de séchage monté à la suite à une détente de pression directe.

15. Procédé selon les revendications 1 à 14, caractérisé en ce qu'on utilise la chaleur de condensation de la vapeur d'échappement de l'installation de préparation du semi-hydrate de sulfate de calcium de type alpha pour réchauffer le dihydrate de sulfate de calcium.
